(19) Europäisches Patentamt
European Patent Office
Office européen des brevets

(11) **EP 2 455 682 A2**

(12) **EUROPÄISCHE PATENTANMELDUNG**

(43) Veröffentlichungstag:
**23.05.2012  Patentblatt 2012/21**

(51) Int Cl.:
*F24J 2/32* (2006.01)     *F24J 2/46* (2006.01)
*F24J 2/51* (2006.01)

(21) Anmeldenummer: **11181819.1**

(22) Anmeldetag: **19.09.2011**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **20.11.2010  DE 102010052103**

(71) Anmelder: **NARVA Lichtquellen GmbH & Co. KG
09618 Brand-Erbisdorf (DE)**

(72) Erfinder:
• **Mientkewitz, Dr. Gerhard
  09599 Freiberg (DE)**
• **Schaffrath, Dr.-Ing. Wilfried
  01738 Dorfhain (DE)**
• **Gey, Christof
  56424 Moschheim (DE)**

(54) **Anlage zur Nutzung von Solarenergie**

(57)     Die Erfindung betrifft eine Anlage zur Nutzung von Solarwärme, aufweisend mindestens einen Kollektor (2), aufweisend Finnen als Absorptionsfläche, mindestens einen Sammler (5), der die von dem mindestens einen Kollektor (2) aufgenommene Solarwärme zu einer Verbrauchsstelle abführt und ein Verbindungskanal (1), der Wärme vom Kollektor (2) in den Sammler (5) leitet. Erfindungsgemäß wird vorgeschlagen, dass der Verbindungskanal (1) und die thermische Isolierung des Sammlers (5) so dimensioniert sind, dass folgende Ungleichung erfüllt ist:

$$\frac{R_{iso}}{R_z + R_{iso}} \leq \frac{\theta_s - \theta_U}{\theta_f - \theta_U}$$

wobei $R_z$ für den thermischen Widerstand des Verbindungskanals (1), $R_{iso}$ für den thermischen Widerstand der thermischen Isolierung des Sammlers (5), $\theta_f$ für die Stagnationstemperatur des Kollektors (2), gemessen als Finnentemperatur, $\theta_s$ für die maximale Temperatur des Fluids im Sammler (5) und $\theta_U$ für die Umgebungstemperatur steht.

Dadurch ergibt sich der Vorteil, dass die Sammlerflüssigkeit auch im Leerlauf bei Besonnung nicht überhitzt werden kann.

Fig. 1

## Beschreibung

Die Erfindung betrifft eine Anlage zur Nutzung von Solarwärme, aufweisend mindestens einen Kollektor, aufweisend Finnen als Absorptionsfläche, mindestens einen Sammler, der die von dem mindestens einen Kollektor aufgenommene Solarwärme zu einer Verbrauchsstelle abführt, wobei der mindestens eine Kollektor mit dem mindestens einen Sammler über mindestens einen Kondensator wärmeschlüssig verbunden ist, und wobei der Kondensator einen Wärmeträger zum Wärmetransport der Solarwärme aus dem Kollektor in den Sammler aufweist und über ein Verbindungskanal mit dem Kollektor verbunden ist, und wobei der Sammler eine thermische isolierung gegenüber der Umgebungstemperatur aufweist.

In typischen Wärmekollektoren zur Nutzung von Solarenergie befinden sich Kollektoren, die mit Hilfe eines Wärmeträgers die von der Sonne absorbierte Wärme vom Kollektor in einen Sammler leiten. Der Sammler nimmt die absorbierte Wärme von in der Regel mehreren parallel geschalteten Kollektoren auf und leitet die aufgenommene Wärme zu einem weiter entfernt liegenden Verbraucher weiter.

Bei der Absorption der Solarwärme wird innerhalb des Kollektors ein Wärmeträger, vorzugsweise ein Fluid, erhitzt, das entweder die gesammelte Wärme über seine Wärmekapazität absorbiert und in flüssiger Form dem Verbraucher zuführt oder das Fluid wird durch die absorbierte Wärme verdampft, wobei "Kollektor" im Folgenden stellvertretend für verschiedene konstruktive Ausgestaltungen von Kollektoren, bei denen der Transport der Wärme betriebsmäßig über die Dampfphase erfolgt, ohne Beiwerk stehen soll. Beim Verdampfen nimmt der Wärmeträger durch die Verdampfungsenthalpie beim Phasenwechsel vom flüssigen in den gasförmigen Zustand eine größere Wärmemenge auf als ausschließlich durch die spezifische Wärmekapazität beim Erwärmen ohne Phasenübergang möglich wäre. Die so im Gaszustand des Wärmeträgers enthaltene latente Wärme wird bei der Kondensation des gasförmigen Wärmeträgers an den inneren Wänden eines mit dem Kollektor verbundenen Kondensators an die Kondensatorwand abgegeben. Die Kondensatorwand ist ihrerseits wärmeschlüssig mit einem außen anliegenden Fluid eines Sammlers verbunden, welches als Sekundärkreislaufstufe durch seine geringere Temperatur den Kondensator von außen kühlt und dabei die latente Wärme des Wärmeträgers aufnimmt. Beim Kondensieren des gasförmigen Wärmeträgers im inneren des Kondensators wird der Wärmeträger wieder flüssig, fließt daher durch die Schwerkraft wieder in den mit dem Kondensator verbundenen Kollektor und dabei wird der Wärmeträger für einen erneuten Zyklus verdampft. Der Wärmetransport durch die latente Wärme des Wärmeträgers übersteigt den Wärmetransport durch Wärmeleitung, beispielsweise durch einen metallischen Wärmeleiter, bei weitem. Beim bestimmungsgemäßen Wärmetransport vom Kollektor zum Sammler dominiert der durch den Wärmeträger erfolgte Wärmetransport gegenüber dem Wärmetransport durch Wärmeleitung, wobei die Wärmeleitung beispielsweise durch metallische konstruktive Verbindungen zwischen Kollektor und Sammler erfolgt, Neben der Wärmeleitung ist es auch möglich, dass Wärme vom Kollektor bis zum Sammler durch Wärmestrahlung befördert wird. Der Wärmetransportanteil vom Kollektor zum Sammler durch Wärmestrahlung ist jedoch vernachlässigbar gering.

Der oben beschriebene Wärmetransport durch den Wärmeträger funktioniert aber nur dann, wenn das Fluid im Sammler als Sekundärkreislauf die äußeren Wandungen des Kondensators kühlt und damit der Kondensator bevorzugter Kondensationsort ist, an dem der im Inneren des Kondensators befindliche Wärmeträger seine latente Wärme abgibt.

Wird der Sekundärkreislauf des Sammlers unterbrochen, weil der Sekundärkreislauf die aufgenommene Wärme nicht an einen Verbraucher weiterleiten kann, dann heizt sich das Fluid im Samm!erkreislauf auf. Ist das Sammlerfluid über die Kondensationstemperatur des Wärmeträgers hinaus erwärmt, dann verdampft der Wärmeträger im Kollektor ohne im Kondensator abgekühlt zu werden, wobei die Temperatur des Wärmeträgers im Kollektor zunächst etwa stabil bleibt und die Temperatur sich danach aufgrund der isochoren Verdampfung erhöht, bis sämtlicher Wärmeträger verdampft ist. Da der Wärmeträger im Kondensator keine gekühlten Wandungen antrifft, kondensiert der Wärmeträger nicht mehr und der Kollektor heizt sich unter Temperaturerhöhung weiter auf, wobei die Temperatur nun mit dem Wärmeeintrag schnell steigt. Die Temperatur steigt dabei solange an, bis sich der Kollektor in einem thermischen Gleichgewicht befindet, dabei Solarwärme absorbiert und absorbierte Wärme durch Wärmestrahlung abstrahlt und durch Wärmeleitung ableitet. Die Temperatur im thermischen Gleichgewichtszustand des Kollektors ist die Stagnationstemperatur, bei der kein nennenswerter Wärmetransport vom Kollektor zum Sammler mehr stattfindet. Die Stelle, an der gerade sämtlicher Wärmeträger verdampft ist, wird im Folgenden "Abschsittemperatur des Kollektors" genannt.

Beim Aufheizen des Kollektors wird das Fluid im Sammler, das den unterbrochenen Sekundärkreislauf bildet, mit aufgeheizt. Nachdem der Wärmeträger im Kollektor vollkommen verdampft ist und nicht mehr an der Kondersatorwand kondensiert, findet die Wärmeübertragung vom Kollektor auf den Sammler nur noch und fast ausschließlich durch Wärmeleitung und ggf. durch vernachlässigbare Wärmestrahlung statt. Zwar ist der im letzten Fall vorliegende Wärmestrom im Vergleich zum Wärmestrom durch den Wärmeträger gering, jedoch genügt dieser Strom, das Fluid im Sammler aufzuheizen, Die maximale Temperatur, die sich dabei im Fluid des Sammlers einstellt, ist im Wesentlichen abhängig von der Güte der den Sammler thermisch isolierenden Isolationsschicht.

Um eine eindeutige Temperaturbestimmung für die Abschalttemperatur des Kollektors durchzuführen, hat es sich als sinnvoll erwiesen, die Temperatur an am Kollektor befindlichen Absorberflächen, meist in Form von Finnen, zu bestimmen. Dieses Finnen als Absorptionsfläche weisen in der Regel besondere Beschichtungen zur Erhöhung der Absorption auf und heizen sich sehr stark auf und leiten die absorbierte Wärme an den Teil des Kollektors, das den Wärmeträger führt. Andere Kollektorteile als die Finnen weisen bei Stillstand der Anlage, wenn kein nennenswerter Wärmetransport stattfindet, in der Regel einen Temperaturgradienten auf, der dem Wärmetransport durch Wärmeleitung folgt.

Die Temperatur an verschiedenen Orten in der Anlage steigt also so lange an, bis ein Gleichgewicht zwischen Zufluss an Wärme durch absorbierte Solarwärme und durch Abfluss an Wärme durch eine nicht perfekte Isolation des Gesamtsystems der Anlage entsteht. In diesem Gleichgewicht befindet sich die Anlage in einem stationären Zustand zwischen Wärmezufuhr durch Absorption und Wärmeabfuhr durch Wärmestrahlung und Wärmeleitung durch die thermische Isolation der Anlage.

Hat die thermische Isolation des Sammlers eine hohe Güte, somit einen sehr hohen thermischen Widerstand, so ist zu erwarten, dass die maximale, sich einstellende Temperatur des Fluids im Sammler höher ist, als wenn die thermische Isolation eine geringere Güte aufweist. Die maximal erreichbare Temperatur des Fluids im Sammler ist aber auch abhängig von der tatsächlichen Wärmeleitung der vom Kollektor absorbierten Wärme in den Sammler.

Wie oben beschrieben, stagniert die Anlage zur Absorption von Solarwärme, wenn der Verbraucher abgeschaltet ist. Die Anlage absorbiert Solarwärme in nicht unerheblichem Maße, die vom System in anderer Weise als durch den Verbraucher abgeleitet werden muss. Die sich dabei in den verschiedenen Anlagenbereichen einstellenden maximalen Temperaturen können in modernen Anlagen mit thermischer Isolation, von recht hoher Güte bis zu 300˚C betragen, Bei Temperaturen dieser Größenordnung bildet sich im wäßrigen Fluid des Sammlers Dampf unter Ausbildung von hohem Druck, der die gesamte Verrohrung der Anlage mechanisch unter hohe Last stellt. Es entstehen Geräusche in der Anlage, die störend sind, wenn diese beispielsweise in privaten Räumen eingesetzt wird. Auch ist es ist möglich, dass das Fluid aufgrund des hohen Drucks in unerwünschter Weise aus dem Sekundärkreislauf ausläuft, Gegebenenfalls zum wässrigen Fluid im Sekundärkreislauf zugefügte Additive, wie Frostschutzmittel oder Korrosionsschutzmittel, können sich bei diesen Temperaturen zersetzen, möglicherweise innerhalb der Verrohrung der Anlage haftende Niederschläge bilden und dadurch die bestimmungsgemäße technische Funktion der Anlage langfristig gefährden. Da die Anlage im Leerlauf weiterhin Wärme absorbiert und diese nicht mehr an einen Verbraucher ableiten kann, ist es erforderlich, dass die Anlage zur Absorption von Solarwärme leerlauffest ist. Die Leerlauffestigkeit kann durch externe Eingriffe im Leerlauf erreicht werden, wie es in folgenden Beispielen aus dem Stand der Technik der Fall ist

Nach der Lehre der Veröffentlichung DE69102856T2 ist es bekannt, unerwünscht hohe Temperaturen in der Sonnenwärme-Anlage dadurch zu verhindern, dass in die zum Kollektor gehörenden Kondensatoren Ventile eingebaut werden, die beim Überschreiten einer vorgewählten Abschalttemperatur den Dampfstrom und damit auch eine weitere Wärmezufuhr unterbinden. Auf diese Weise wird damit die Temperatur stabilisiert. Nachteilig dabei ist aber, dass ein technisch aufwendiges Ventil .zur Realisierung der Abschaltfunktion erforderlich ist, welches bei Temperaturen von über 100˚C über einen Zeitraum von ca 20 Jahren zuverlässig dicht sein muss, Die Aufrechterhaltung der Dichtungsfunktion ist in tatsächlichen Systemen aber nicht, zumindest aber nur mit hohem technischem Aufwand, zu erfüllen. Darüber hinaus erfolgt bei länger andauernder Stagnation der Anlage eine Aufheizung über die Abschalttemperatur durch Wärmeleitung über die Verbindung zwischen Verdampfer und Kondensator, wodurch eine nicht akzeptable Erwärmung des Fluids im Sammler als Sekundärkreislauf stattfindet.

der Veröffentlichung DE20108682U1 wird gelehrt, dass eine Abschalttemperatur von 170˚C bis 190˚C dadurch erreicht werden kann, indem in diesem Temperaturberetch das gesamte Kühlfluid, Wasser bzw. ein Wasser-Alkohol-Gemisch eines Wärmerohres eines Sydney-Vakuum-Rohrkollektors, verdampft ist und dadurch keine Wärme mehr transportiert wird. Nachteilig bei dieser Erfindung ist, dass die Abschalttemperatur sehr hoch ist und dass nicht berücksichtigt ist, dass über das Kupferrohr zwischen Verdampferteil des Kollektors und Kondensationsbereich des Kondensators ein weiterer Wärmetransport erfolgt, so dass der angegebene Abschalttemperaturbereich weit überschritten werden kann.

Nach der Lehre der Veröffentlichung DE3015061 wird eine Überhitzung dadurch vermieden, in dem im Stagnationsfall ein Radiator in das System eingeschaltet wird, der die Wärme abstrahlt. Nachteilig bei dieser Lösung ist, dass eine Temperaturmessung und eine Steuerung erforderlich ist, die den Radiator in das System einbindet und dass eine Pumpe betrieben werden muss.

Die Veröffentlichung EP1970642A2 lehrt, dass über den Kollektoren befindliche schwenkbare Abdeckungen im Falle der Überschreitung einer Grenztemperatur die Kollektoren abschattet. Die Abschattung wird über eine thermohydraulische Steuerung eingeleitet. Nachteilig an dieser Lösung ist der hierzu notwendige technische Aufwand für die Abdeckung, deren Schwenkmechanik und deren Steuerung.

In der Veröffentlichung DE10341741A1 wird offenbart, dass eine Temperaturüberwachung an den Kollektoren und eine Steuerungseinheit an der Solarpumpe die Anlage vor unerwünschten Temperaturen schützt. Die Vorrichtung aus Temperaturüberwachung und Steuerungseinheit bewirkt, dass bei Unterschreitung einer Mindesttemperatur an den Kollektoren die Pumpe in Betrieb gesetzt wird und damit warmes Wasser in die Kollektoren gefördert wird. Mit der Vorrichtung wird somit ein Einfrieren der Kollektoren verhindert. Das Ziel der Vorrichtung besteht darin, Wasser ohne Frostschutzmittel einsetzen zu können, um die dargestellten Schäden durch Frostschutzmittel-Reaktionen zu verhindern. Nachteilig bei dieser Lösung ist, dass einerseits durch ein Ausfall der Pumpe bei Frost die Kollektoren zerstört werden, dass andererseits durch das Nachheizen Energie verbraucht wird und des Weiteren Schäden an der Sonnenwärmeanlage durch Dampf und sehr hohe Temperaturen im Stagnationsfall auftreten können

Eine Temperaturbegrenzung ist aus der Veröffentlichung DE2022008007647U1 und aus der Veröffentlichung DE20108682U1 bekannt, die dadurch wirkt, dass bei der vorgewählten Abschalttemperatur der Wärmeträger des Kollektors vollkommen verdampft ist. In den oben genannten Veröffentlichungen wird unter anderem gelehrt, dass die Verbindung zwischen Verdampferteit des Kollektors und Kondensator aus einem Material mit geringer Wärmeleitfähigkeit besteht. Zwar wird durch den Einsatz von Material mit geringer Wärmeleitfähigkeit der Eintrag von Wärme in das Fluid des Sekundärkreislaufes im Sammler verringert. Diese führt aber lediglich zu einer Verlängerung des Zeitraumes, bis auch im Sammler Temperaturen entstehen, die zu Schäden an der Anlage führen können.

Alle aus oben genannten Veröffentlichungen bekannten Techniken zur Vermeidung von unerwünschten Temperaturen lösen das Problem der möglichen Überhitzung durch externe Maßnahmen oder durch Veränderung der Funktionsweise der Anlage, wenn eine zu hohe Temperatur vorliegt. Die externen Maßnahmen erhöhen die Komplexität der Anlage oder erreichen das Ziel der Vermeidung unerwünschter Temperaturen in der Anlage in nur unzureichendem Maße,

Aufgabe der Erfindung ist es daher, eine Anlage zur Nutzung von Solarwärme zur Verfügung zu stellen, die ohne externe, in den Wärmekreislauf eingreifende Mittel eigensicher ist. Unter "eigensicher" in Bezug auf die Lehre in dieser Anmeldung wird verstanden, dass die Anlage so konstruiert ist, dass sie keine unerwünscht hohen Temperaturen im Fluid des Sammlers erzeugen kann, wobei durch diese Konstruktion die Güte der Anlage, im Sinne einer Absorptionsleistung nicht beeinträchtigt wird.

Die efindungsgemäße Aufgabe wird dadurch gelöst, dass der Verbindungskanal und die thermische isolierung des Sammlers so dimensioniert sind, dass folgende Ungleichung erfüllt ist:

$$\frac{R_{iso}}{R_z + R_{iso}} \leq \frac{\theta_S - \theta_U}{\theta_f - \theta_U}$$

wobei $R_z$ für den thermischen Widerstand des Verbindungskanals, $R_{iso}$ für den thermischen Widerstand der thermischen, isolierung des Sammlers, $\theta_f$ für die Stagnationstemperatur des Kollektors, gemessen als Finnentemperatur, $\theta_S$ für die maximale Temperatur des Fluids im Sammler und $\theta_U$ für die Umgebungstemperatur steht.

Erfindungsgemäß wird vorgeschlagen, dass die tatsächliche Wärmeleitung über den Verbindungskanal zwischen Kollektor und Kondensator einerseits und die Wärmeleitung durch die thermische Isolation des Sammlers andererseits ein bestimmtes Größenverhältnis aufweisen. Dieses Größenverhältnis wird in Bezug gesetzt zum Größenverhälnis aus der Abschalttemperatur, die durch die Konstruktion des Kollektors vorgegeben ist und der erwünschten Maximaltemperatur des Fluids im Sammlers. Dabei werden die Temperaturen in der Ungleichung um den Betrag der Außentemperatur verringert.

Die Erfindung macht sich zu Nutze, dass eine tatsächliche thermische Isolation des Sammlers nicht perfekt ist, sondern konstruktionsbedingt einen geringen Wärmefluss im Sinne einer Verlustwärme zulässt. Wird der Wärmefluss durch Wärmeleitung vom Kollektor über den Verbindungskanal zwischen Kollektor und Kondensator so eingestellt, dass die oben stehende Ungleichung erfüllt ist, so wird nur gerade so viel Wärme von den Finnen des Kollektors über den den Wärmeträger führenden Verbindungskanal in das Fluid des Sammlers eingeleitet, wie über die Isolation des Sammlers aus dem Sammler austritt. Da die Wärmmenge, die durch die Isolation des Sammlers austritt, abhängig ist von der Temperaturdifferenz zwischen der Temperatur des Fluids im Sammler und der Umgebungstemperatur, stellt sich bei dem oben genannten Verhältnis eine Temperatur des Fluids ein, welche die gewählte Maximaltemperatur $\theta_S$ nicht überschreitet.

Die tatsächliche Wärmeleitung durch den Verbindungskanal, damit der thermische Widerstand des Verbindungskanals wird dominiert durch die Wärmeleitfähigkeit des Materials, aus dem der Verbindungskanal besteht. Als verfügbare Parameter zum Einstellen der Wärmeleitfähigkeit stehen zur Verfügung die Materialstärke des Verbindungskanals und das Material selber.

Beim Einstellen der oben genannten Parameter ist es nicht notwendig, die geringst mögliche Wärmeleitung herzustellen, damit auf teure Materialien abzustellen, die eine sehr geringe Wärmeleitfähigkeit aufweisen. Würde der Verbindungskanal beispielsweise aus einem keramischen Material hergestellt, um den geringst möglichen Wärmefluss durch Wärmeleitung im Stagnationsfall zu ermöglichen, würde dies dazu führen, dass das Fluid im Sammler sich für einen vorbestimmten Zeitraum nicht zu stark aufheizt. Dennoch führt die geringe Wärmeleitung des Verbindungskanals zu einer lokalen Überhitzung des Fluids im Sammler. Durch die Einstellung des oben genannten Verhältnisses ist es möglich, dem Sammler im Leerlauf so viel Wärme zuzuführen, dass dieser eine vorgewählte Maximaltemperatur gerade eben nicht übersteigt, aber dennoch wird durch die eigentlich unerwünschte Wärmeleitung durch den Verbindungskanal nur so viel Wärme aus dem Kollektor abgeleitet, so dass die thermische Last im Fluid des Sammlers im Leerlauffall nicht unnötig erhöht wird.

Überraschenderweise hat sich gezeigt, dass bereits die Verwendung von Edelstahl, Eisen oder Nickellegierungen als Ersatz des bisher bekannten Kupfers als Material des Verbindungskanals dazu führt, dass die oben genannte Ungleichung erfüllt werden kann, wobei die thermische Isolation und damit die Wärmeleitung gerade so groß ist, dass die die in der Ungleichung stehenden Quotienten nahezu gleich werden. Damit wird die maximal erwünschte Temperatur des Fluids im Sammler erreicht. Bei Verwendung eines Materials für den Verbindungskanal mit einem höheren spezifischen thermischen Widerstand als Kupfer ist ebenfalls die oben genannte Ungleichung dadurch zu erfüllen, in dem die Wandstärke an den spezifischen thermischen Widerstand angepasst wird.

Die tatsächliche konstruktive Ausgestaltung des Verbindungskanals und der Isolierung des Sammlers ist durch Berechnung zu ermitteln. Es ist aber alternativ möglich, den Verbindungskanal mit hohem thermischen Widerstand aufzubauen und an der Anlage die Isolation des Sammlers soweit zu verringern, dass sich die vorgewählte Maximaltemperatur des Fluids im Sammler bei Leerlauf einstellt, so dass die Anlage eigensicher ist.

Durch die erfindungsgemäße Konfiguration ist es neben der "nassen" Anbindung, die den Vorteil eines hohen Wirkungsgrades durch Vermeidung unnötiger thermischer Widerstände bietet, möglich, eine trockene Anbindung des Kondensators an den Sammler zu wählen, wobei das Fluid des Sammlers nicht in direktem Kontakt mit dem Kondensator steht. Die trockene Anbindung ermöglicht, eine leichte Austauschbarkeit der einzelnen Kollektoren, weil die Kondensatoren der Kollektoren in einer Hülse im Sammlerrohr stecken. Dadurch lässt sich der Sammler einfacher aufbauen und es sind daher weniger Stehen vorhanden, an denen das Sammlerrohr undicht werden könnte. Die Erfindungsgemäße Konfiguration ist in diesem Ursache dafür, dass er Kollektor und auch das Fluid im Sammler nicht überhitzt, was bei der trockenen Anbindung im Leerlauffall der Anlage schnell passiert.

In vorteilhafter Weise weisen die Kollektoren eine thermische Vakuum-Isolierung auf, wodurch der Wärmeverlust durch Wärmeleitung sehr gering ausfällt. Da durch die erfindungsgemäße Einstellung des Verhältnisses der thermischen Wärmeleitfähigkeiten eine Eigensicherheit gewährleistet ist, kann die Vakuum-isolation sogar den Verbindungskanal umfassen und auch diesen vor Wärmeverlust in Form von Wärmeleitung schützen.

Bei der bevorzugten Ausführung der erfindungsgemäßen Anlage liegt die maximale Stammlertemperatur im Bereich zwischen 80°C und 150°C und der statische Druck in den Sammlern ist höher als der Dampfdruck des Fluids des Sammlers bei dieser Temperatur. Das Fluid im Sammler kann dadurch Wasser sein, das gegebenenfalls mit Korrosionsschutzmittel versehen ist, oder ein Frostschutzmittel-Wasser-Gemisch sein, das durch das Korrosionsschutzmittel einen erhöhten Siedepunkt aufweist.

Dadurch, dass die Maximaltemperatur im Sammler durch die erfindungsgemäße Konfiguration der Wärmeleitfähigkeiten eigensicher und leerlauffest begrenzt ist, kann das Sammlerrohr, welches üblicherweise aus einem metallischen Werkstoff hergestellt ist, aus einem deuer-temperaturfesten Kunststoff, aus einer einfachen Keramik oder aus Glas bestehen. Diese Materialien ermöglichen einen kostengünstigeren Aufbau der Anlage. Aber nicht nur die Verrohrung des Sammlers kann aus diesen Materialien bestehen, sondern auch das Sammlergehäuse und die Isolierung des Sammlers selbst, wobei der dauer-temperaturfeste Kunststoff an die Maximaltemperatur des Fluids im Sammler angepasst ist.

Dadurch, dass die Maximaltemperatur im Sammler durch die erfindungsgemäße Konfiguration der Wärmeleitfähigkeiten eigensicher und leerlauffest begrenzt ist es auch möglich, ein vorhandenes Ausdehnungsgefäß so zu dimensionieren, dass ausschließlich die thermische Ausdehnung des Fluids ausgleichen muss und kein Volumen für eine übermäßige Dampfbildung zur Verfügung stehen muss. Die Kosten für eine Anlage zur Nutzung von Solarwärme verringern sich dadurch.

Die Erfindung wird anhand der folgenden Figuren näher erläutert. Es zeigt:

Figur 1     einen Ausschnitt einer Kollektoranlage im Bereich der parallel geschalteten Kondensatoren im Sammler,

Figur 2     ein Ersatzschaltbild eines Kollektors und Sammlers,

Figur 3     ein Wärmemengen-Temperaturverlauf des Wärmeträgers.

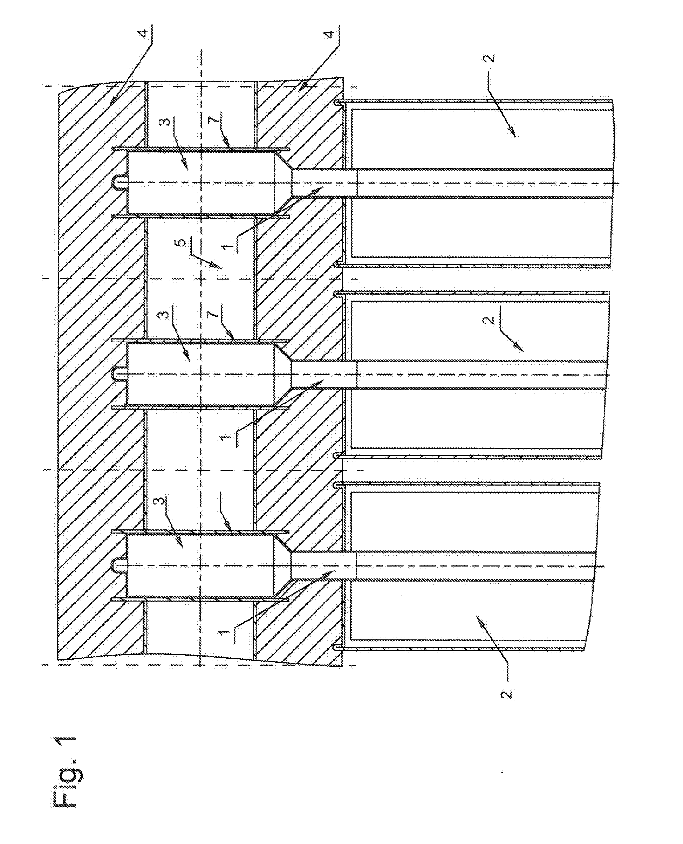

In Figur 1 ist ein Ausschnitt einer Anlage zur Nutzung von Solarwärme dargestellt. Etwa mittig in dem Ausschnitt sind die Verbindungskanäle 1 gezeichnet, welche die Kollektoren 2, aufweisend Finnen als Absorptionsfläche mit den Kondensatoren 3 verbinden. Die Kondensatoren 3 sind in einer thermischen Isolationsschicht 4 aufgenommen, wobei ein Sammlerrohr 5 die Kondensatoren 3 umschließt. Der wärmeschlüssige Kontakt zwischen den Kondensatoren 3 und dem Sammlerfluid im Sammlerrohr 5 wird über eine Hülse 7 geschlossen, wobei die absorbierte Wärme der Kollektoren 2, aufweisend Finnen als Absorptionsfläche, über diese Hülse 7 in das Fluid des Sammlerrohrs 5 fließt.

Wenn sich die Anlage zur Nutzung von Solarenergie im Leerlauf befindet und die Temperatur des Wärmeträgers in den Kondensatoren 3 und den Kollektoren 3 bis zur Stagnationstemperatur aufgeheizt hat, sind folgende Bedingungen erfüllt:

Zunächst ist der Wärmestrom $\dot{Q}_a$, der in die Anlage zur Nutzung von Solarwärme durch Absorption von Solarwärme hineinfließt, vom Betrag her gleich der Summe der abfließenden Wärmeströme $\dot{Q}_{SV}$ und $\dot{Q}_{iso}$, wobei der Wärmestrom $\dot{Q}_{SV}$ für den Wärmestrom steht, der aus dem Strahlungsverlust (Index "SV") bereits im Kollektor resultiert und der Wärmestrom $\dot{Q}_{iso}$, für den Wärmestrom steht, der aus dem Abfluss von Wärme durch die Isolierung (Index "iso") des Sammlers steht, gemäß folgender Gleichung:

$$\dot{Q}_a \approx \dot{Q}_{SV} + \dot{Q}_{iso} \tag{1}$$

Der absorbierte Wärmestrom $\dot{Q}_a$ hängt von den Parametern des Kollektors ab:

$$\dot{Q}_a \approx \tau * a_1 * P_s * A_1 \tag{2}$$

mit

$\tau$     Transmission des eingesetzten Glases der Kollektorhüllrohre

$a_1$     Absorptionskoeffizient der Finnenoberfläche der Kondensatoren

$P_s$     Solare Strahlungsleistung

$A_1$     aktive Absorotionsfläche des Absorbers

Für (2) wird vereinfachend davon ausgegangen, dass die Absorption von Solarwärme ausschließlich durch die an den Kollektorrohren vorhandene Finnen bestimmt wird, die eine spezielle Beschichtung zur Erhöhung der Absorption von solarer Wärme aufweisen. Die Transmission $\tau$ berücksichtigt hier schon die Glasstärke. Der abfließende Wärmestrom $\dot{Q}_{SV}$ durch der) Strahlungsverlust ist in (1) gegeben durch

$$\dot{Q}_{SV} \approx (\varepsilon_1 * A_1 + \varepsilon_2 * A_2) * \sigma * T_f^4 + \beta * (A_1 + A_2) * (T_f - 273) \tag{3}$$

mit

$\varepsilon_1$     Emissionskoeffizient der aktiven Absorberfläche, hier die Finnenoberfläche

$A_1$     aktive Absorptionsfläche des Absorbers

$\varepsilon_2$     Emissionskoeffizient der unbeschichteten Absorberfläche, hier die Finnenoberfläche

$A_2$     unbeschichtete Absorptionsfläche des Absorbers

$\sigma$     Strahlungszahl nach Boltzmann

$T_f$     Stagnationstemperatur in Kelvin gemessen an den Finnen

$\beta$     Wärmeleitkoeffizient

In (3) werden die Terme aus der Wärmestrahlung, in welche die Temperatur mit der 4, Potenz eingeht, addiert zu den Termen, welche den Wärmestrom durch Warmeleitung darstellen.

Der Wert des Emissionskoeffizienten der Beschichtung ist nicht konstant wie bei einem schwarzen Strahler, sondern in realen Systemen variiert dieser mit der Temperatur gemäß folgender Polynomialgleichung:

$$\varepsilon_1 = 0{,}01 * \left( 3{,}25 + 3{,}2 * 10^{-3} * \left( T_f - 273 \right) + 4{,}0 * 10^{-5} * \left( T_f - 273 \right)^2 \right) \tag{4}$$

mit

$T_f$    Stagnationstemperatur in Kelvin, gemessen an den Finnen

Der Wärmestrom $\dot{Q}_{iso}$ durch den Verbindungskanal und durch die Isolierung ist in (1) gegeben durch:

$$\dot{Q}_{iso} = \frac{\left( T_f - 273 - \theta_U \right)}{\left( R_z + R_{iso} \right)} \tag{5}$$

mit

$T_f$    Stagnationstemperatur in Kelvin, gemessen an den Finnen
$\theta_U$    Umgebungstemperatur in °C
$R_z$    thermischer Widerstand des Verbindungskanals
$R_{iso}$    thermischer Widerstand der Isolierung

Gleichung (5) beschreibt, dass der Wärmestrom $\dot{Q}_{iso}$ aus der Wärme, die am Kollektor anliegt, und der durch die Isolierung des Sammlers abfließt, proportional ist zum Temperaturunterschied zwischen Stagnationstemperatur $T_f$ und Umgebungstemperatur $\theta_U$, und dieser Wert ist umgekehrt proportional zur Summe der thermischen Widerstände $R_z$ und $R_{iso}$ des Verbindungskanals und der Isolierung des Sammlers. Insofern ähnelt diese Gleichung dem ohm'schen Gesetz der Elektrotechnik, wobei der Temperaturunterschied der elektrischen Spannung entspricht, die thermischen Widerstände den elektrischen Widerständen entsprechen und der Wärmestrom dem elektrischen Strom entspricht. Schließlich beschreibt untenstehend (6), dass die Sammlertemperatur $\theta_s$ abhängig ist von der Umgebungstemperatur $\theta_U$ und dem aus dem Sammler abfließenden Wärmestrom $\dot{Q}_{iso}$:

$$\theta_S = \dot{Q}_{iso} * R_{iso} + \theta_U \tag{6}$$

Einsetzen von (5) in (6) ergibt.

$$\theta_S = \frac{\left( T_f - 273 - \theta_U \right)}{\left( R_z + R_{iso} \right)} * R_{iso} + \theta_U \tag{7}$$

Durch Umstellung wird folgende Gleichung erhalten:

$$\frac{R_z + R_{iso}}{R_{iso}} \geq \frac{\theta_f - \theta_U}{\theta_S - \theta_U} \tag{8}$$

mit

$\theta_f$ Stagnationstemperatur in °C, ($T_f$ - 273), gemessen an den Finnen Aus Praktikabilitätsgründer wird im Folgenden auf den reziproken Wert von (8) abgestellt, wobei sich dann in Ungleichung (8) das "≥" verkehrt:

$$\frac{R_{iso}}{R_Z + R_{iso}} \leq \frac{\theta_S - \theta_U}{\theta_f - \theta_U} \qquad\qquad (9)$$

Gleichung (9) erinnert an die Verhältnisse in einem elektrischen Spannungsteiler.

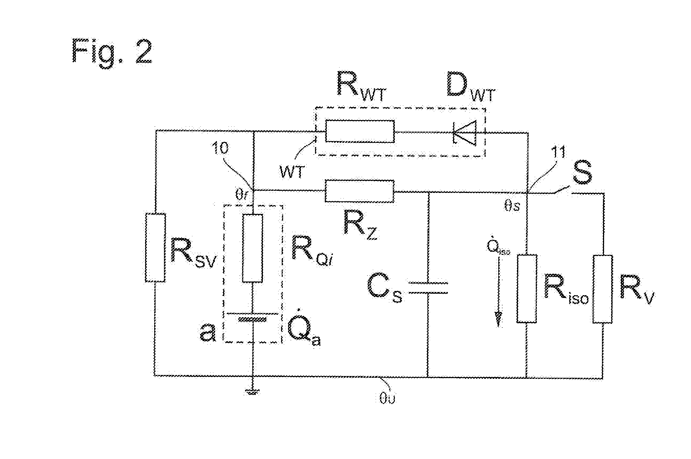

Aufgrund der frappierenden Ähnlichkeit der Gleichungen für den Wärmestrom ist in Figur 2 ein Ersatzschaltbild der Anlage zur Nutzung von Solarwärme mit einem Kollektor dargestellt. In diesem Ersatz-schaltbild wird von einem unterbrochenen Sekundärkreislauf ausgegangen. Dies ist in dem Ersatzschaltbild dargestellt durch den geöffneten Schalter S, der einen Verbraucherstrom $\dot{Q}_V$ über den geringdimensionterten Widerstand $R_V$ als Verbraucher unterbricht. Zur Beschreibung des Ersatzschaltbilds in Figur 2 wird von einem eingeschwungenen Zustand ausgegangen, stellvertretend für eine Anlage zur Nutzung von Solarwärme im Stagnationszustand oder im Leerlauf. In dieser Schaltung befindet sich das Massepotential auf einem von Null verschiedenen Niveau, stellvertretend für das Temperaturniveau der Umgebungstemperatur $\theta_U$. Die Stagnationstemperatur $\theta_f$, gemessen an den Finnen, wird in dem Ersatzschaltbild dargestellt durch das elektrische Potential an Punkt 10.

Beginnend bei der Stromquelle a, die einen begrenzten Strom $\dot{Q}_a$ unter Berücksichtigung des Innenwiderstands $R_{Qi}$ liefert, der stellvertretend für den Solarwärmestrom $\dot{Q}_a$ steht, ist die Summe der Ströme an Punkt 10 der Schalung nach der kirchhoff schen Regel gleich Null. Dies bedeutet, gemäß (1) ist $\dot{Q}_a = \dot{Q}_{SV} + \dot{Q}_{iso}$, (Vorzeichen sind hier ignoriert) wobei der Strom $\dot{Q}_{SV}$, der Über $R_{SV}$ abfließt, stellvertretend ist für den Strahlungsverlust $\dot{Q}_{SV}$ in (1). Der Strahlungsverlust fließt im Ersatzschaltbild also über den Widerstandl $R_{SV}$ ab und steht dem System nicht mehr zur Verfügung und wird von der begrenzten Stromquelle a nicht nachgeliefert.

Der nicht über den Widerstand $R_{SV}$ abfließende Strom kann ausschließlich über den Widerstand $R_Z$, stellvertretend für den thermischen Widerstand des Verbindungskanals, fließen, weil der Wärmeträger WT im tatsächlichen System vollkommen verdampft ist und über ihn faktisch kein Wärmetransport mehr stattfindet. In dem Ersatzschaltbild in Figur 2 wird der Wärmeträger WT durch die Kombination aus Widerstand $R_{WT}$ und die Zenerdiode $D_{WT}$ ersetzt, wobei sich die Zenerdiode $D_{WT}$ im Sperrzustand befindet.

Da sich das System im eingeschwungenen Zustand befindet, ist im Ersatzschaltbild in Figur 2 der Kondensator $C_S$ vollkommen geladen und an ihm liegt ein elektrisches Potential gegenüber Masse an, das dem Spannungsabfall über den Widerstand $R_{iso}$ entspricht. In dem hier angenommenen Zustand wird die Schaltung nach Figur 2 also nur durch die Wirkung der Schaltelemente $R_{SV}$, a, $R_Z$ und $R_{iso}$ dominiert.

Das elektrische Potential am Punkt 11 des Ersatzschaltbildes entspricht der Temperatur $\theta_s$ des Fluids Sammler.

Der Strom $\dot{Q}_a$ fließt somit über die als Spannungsteiler geschalteten Widerstände $R_z$ und $R_{iso}$, wobei der Spannungsabfall $\theta_S - \theta_U$ zwischen Punkt 11 des Ersatzschaltbildes und Massepotential bestimmt wird gemäß

$$\theta_S - \theta_U = \dot{Q}_{iso} * \frac{R_{iso}}{R_Z + R_{iso}} \qquad\qquad (10)$$

wobei (10) eine identische Form zur Beziehung von Strom, Spannung und Widerstand eines Spannungsteilers aufweist gemäß U = I * $R_{iso}$ / ($R_z$ + $R_{iso}$).

Erfindungsgemäß wird nun also vorgeschlagen, die thermischen Widerstände $R_z$ des Verbindungskanales und $R_{iso}$ der isolierung des Sammlers so zu dimensionieren, dass sich ein vorteilhaftes Temperaturniveau (im Ersatzschaltbild in Figur 2, Spannungsverhältnis zwischen Punkt 10 und Punkt 11) einstellt. Bei einer vorgegebenen Stagnationstemperatur $\theta_f$, gemessen an den Finnen, und einer vorher gewählten maximalen Temperatur $\theta_S$ für das Fluid im Sammler ist das thermische Widerstandsverhältnis von $R_Z$ des Verbindungskanales und $R_{iso}$ der Isolierung des Sammlers gemäß (9) so einzustellen, dass

$$\frac{R_{iso}}{R_Z + R_{iso}} \leq \frac{\theta_S - \theta_U}{\theta_f - \theta_U} \qquad\qquad (11)$$

wobei von üblichen Umgebungstemperaturen der Außenluft $\theta_U$ zwischen ~25°C und +35°C auszugehen ist, Je geringer die Umgebungstemperatur $\theta_U$ ist, desto geringer wird das Verhältnis auf der rechten Seite von (11). Um die schwankenden Umgebungstemperaturen zu berücksichtigen, wird die Ungleichung eingeführt, wobei sich die Ungleichung auf den Intervall bezieht, der sich durch Einsetzen des höheren und geringeren Wertes der schwankenden Außentemperatur einstellt.

Durch die Einstellung des thermischen Widerstandsverhältnisses zwischen Verbindungskanal und Isolationsschicht des Sammlers wird gewährleistet, dass die Temperatur im Fluid des Sammlers nicht überhitzt, selbst dann nicht, wenn sich die Anlage zur Nutzung von Solarwärme lange Zeit im Leerlauf befindet, was in privaten Haushalten beispielsweise in Urlaubszeiten der Fall ist, wenn das korrespondierende Haus leer steht. Auf der anderen Seite wird durch die erfindungsgemäße Einstellung des thermischen Widerstandsverhältnisses gewährleistet, dass das Fluid des Sammlers bis nahe an die vorher gewählte maximale Temperatur herangeführt wird, wodurch die thermische Last im höchst möglichen Maße verringert wird.

Im Stand der Technik wird davon ausgegangen, den thermischen Widerstand $R_Z$ des Verbindungskanals möglichst groß zu wählen, damit die Wärme leitung das im Sammler befindliche Fluid nicht zu stark aufheizt. Dabei wird vernachlässigt, wie hoch der thermische Widerstand der Isolation des Sammlers ist. Ist auch dieser sehr hoch, damit ist also die Güte der Isolierung des Sammlers besonders hoch, dann ist der gesamt Wärmefluss durch Wärmeleitung zwar verringert, dennoch stellt sich nach korrespondierender Zeit ein möglicherweise ungünstiges Temperaturverhältnis ein. Durch die erfindungsgemäße Konfiguration ist eine Eigensicherheit der Anlage erreichbar, wobei das Fluid im Sammler nicht über eine gewählte maximale Temperatur hinaus geht und der Kollektor nicht unnötig hoher thermische Last ausgesetzt ist.

Wenn gemäß Figur 2 durch Schließen des Schalters S der Verbraucher, dargestellt durch den Widerstand $R_V$, eingeschaltet wird, ändert sich die Funktionsweise im Ersatzschaltbild wie folgt:

Da der Widerstand $R_V$ des Verbrauchers niederohmig ist im Verhältnis zum Widerstand $R_{iso}$ und auch geringer dimensioniert ist als der Widerstand $R_{WT}$ der Übertragung der Wärme durch den Wärmeträger, fällt über die Zenerdiode $D_{WT}$ eine hohe Spannung ab, gleichbedeutend mit einem hohen Temperaturunterschied am Kondensator, Dadurch bricht die Zenerdiode in Sperrrichtung durch, gleichbedeutend mit der plötzlichen Kondensation des Wärmeträgers im Kondensator. Der Wärmestrom aus der Stromquelle a, abzüglich des Stroms $\dot{O}_{SV}$, der als Verlustleistung verloren geht, fließt nun über die niederohmige Strecke $R_{WT}$, $D_{WT}$ und $R_V$, wobei der zum Wärmeträger WT parallele und hochohmige Widerstand $R_Z$ einen vernachlässigbaren Strom führt, wie auch der Widerstand $R_{iso}$. Weil der Widerstand es Verbrauchers $R_V$ niedriger ist als der Widerstand der Warmetrager-Strecke WT, ist das elektrische Potential (die Temperatur) an Stelle 11 des Ersatzschaltbildes in Figur 2 geringer als die gewählte maximale Temperatur $\theta_S$ des Fluids im Sammler. Folglich ist Kondensator $C_S$ nicht geladen, oder an ihm liegt eine geringere Spannung an.

Wenn der Verbraucher $R_V$ durch Öffnendes Schalter S wieder abgeschaltet wird, so liegt an Stelle 11 des Ersatzschaltbildes in Figur 2 solange eine niedrige Spannung an, bis der Kondensator $C_S$ geladen ist. Dies ist gleichbedeutend mit einem allmählichen Aufheizen des Fluids im Sammler, bis die Kondensation des Wärmeträgers im Kondensator aufhört. Wenn der Kondensator $C_S$ geladen ist, fällt über die Zenerdiode $D_{WT}$ keine oder eine geringe Spannung ab, wodurch die Zenerdiode $D_{WT}$ sperrt. In diesem Zustand ändert das Ersatzschaltbild nach Figur 2 seine Funktion, wie oben eingangs beschrieben ist.

Wird, wie im Stand der Technik vorgeschlagen, der Widerstand $R_Z$ extrem hoch gewählt, so dauert die Aufladung des Kondensators $C_S$ extrem lange, weil die Zeitkonstante dieser Schaltung künstlich erhöht wird. In Folge ist die Spannung an Punkt 10 der Schaltung sehr hoch, gleichbedeutend mit einer hohen thermischen Last des Kollektors, die durch die erfindungsgemäße Konfiguration vermieden wird.

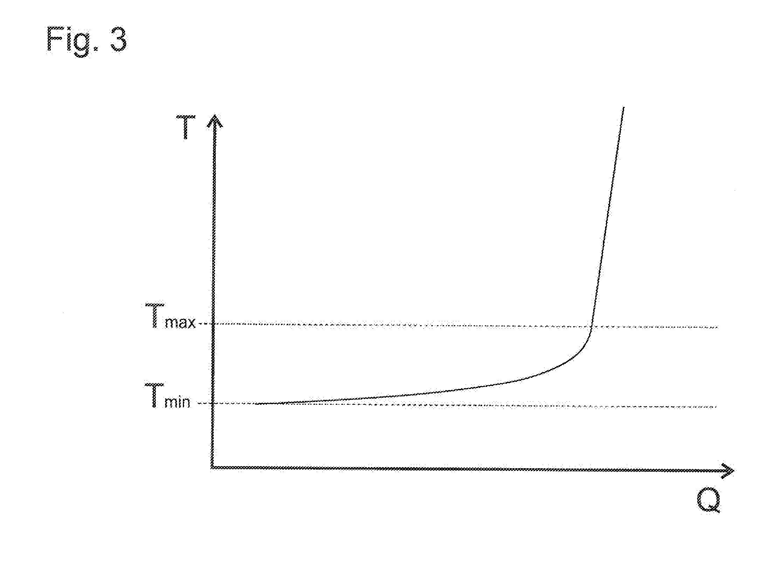

Zur Verdeutlichung des Verhältnisses von Wärmemengen und Temperatur in der Anlage wird das Temperaturverhalten des Kollektors in Figur 3 dargestellt. Beginnend bei einer Minimaltemperatur $T_{min}$, bei welcher der Kollektor arbeitet, nimmt der Kollektor Wärme Q auf und heizt sich dabei auf. Ein Teil des Wärmeträgers im Kollektor verdampft dabei. Weil der Kollektor dem verdampften Fluid keinen zusätzlichen Raum zur Ausdehnung zur Verfügung stellt, erhöht sich im Kollektor der Druck über dem noch flüssigen Wärmeträger. In Folge des erhöhten Druckes erhöht sich der Siedepunkt und damit verschiebt sich auch das Verdampfungsgleichgewicht gemäß Siede- und Taukurve. Je mehr Wärmeträger verdampft, desto höher ist die im Kollektor vorherrschende Temperatur, die notwendig ist, weiteres Fluid zu verdampfen. Kurz vor Verdampfen sämtlicher Wärmeträgerflüssigkeit erhöht sich der Druck in dem Kollektor erheblich. Die tatsächliche Temperaturkurve, die sich mit zugeführter Wärmemenge Q als Wärmeenergiemenge, einstellt, ist aber stark abhängig von der Menge des Wärmeträgers im Verhältnis zum Kollektorvolumen. Ist das Volumen im Verhältnis zur Wärmeträgermenge groß, so wird die Temperatur T nahezu stabil bleiben und erst mit dem Verdampfen des letzten Wärmeträgers plötzlich ansteigen, ist hingegen das Kollektorvolumen gering im Verhältnis zur Wärmetragermenge, so steigt zum Ende des Verdampfungsprozesses die Temperatur T stark an, weil sich der Druck stark erhöht.

An dem Punkt, an dem sämtlicher Wärmeträger verdampft ist und vom Wärmeträger weitere Wärmemenge nur durch Aufheizen des Wärmeträgerdampfes aufgenommen kann, stellt sich die für den Kollektor typische maximale Temperatur $T_{max}$ ein. Es ist Ziel der Erfindung, die Temperatur im Kollektor/Kondensator auf diese Temperatur $T_{max}$ zu begrenzen. Die Kollektortemperatur soll nicht höher steigen als diese Temperatur, wenn sämtlicher Wärmeträger gerade eben verdampft ist. Das besondere der Erfindung ist, dass der Wärmefluss durch das gesamte System ohne Kondensation mit wesentlich höheren Wärme-Widerständen erfolgt und daher diese Temperatur bei Einstellung des erfindungsgemäßen Verhältnisses der Wärmeisolationen gut zu treffen ist.

Durch folgende Vorgehensweise ist die Anlage erfindungsgemäß einstellbar:

Zunächst wird ein Kollektor auf eine erwünschte Abschalttemperatur eingestellt, Dies bedeutet, dass der Kollektor mit einem Wärmeträger befüllt wird, der bei vollständiger Verdampfung die gewählte Abschalttemperatur erreicht. Da die Temperatur im Kollektor mit steigendem Druck durch Verdampfung des Wärmeträgers selbst steigt, ist neben und dem materialspezifischen Dampfdruck die Füllmenge des Kollektors relevant. Aus bekannten thermodynamischen Zustandsdiagrammen des gewählten Wärmeträgers lässt sich bei vorbestimmtem Volumen des Kollektors die zur Erreichung der vorgewählten Abschalttemperatur rechnerisch ermitteln. Dabei ist das Kollektorvolumen als Gasraum für den gesamten Wärmeträger anzusetzen. Aus der Molmenge des Wärmeträgers lässt sich der Gasdruck im Kollektor bestimmen und aus dem Gasdruck die korrespondierende Temperatur, welche die Abschalttemperatur sein soll. Dabei ist zu berücksichtigen, dass der Gasdruck nicht ausschließlich durch die Molmenge des Wärmeträgers im Volumen des Kollektors bestimmt wird, sondern auch durch die tatsächlich herrschende Temperatur. Gasdruck und Temperatur bedingen hier einander. Es hat sich als vorteilhaft erwiesen, die berechnete Füllmenge experimentell zu überprüfen, um Abweichungen vom theoretischen thermodynamischen Modell zu berücksichtigen.

In einem weiteren Schritt wird der thermische Widerstand des Verbindungskanales dimensioniert. Hierzu stehen als Parameter zur Auswahl: das Material des Verbindungskanales selbst, beispielsweise Edelstahl und andere Nickel-Legierungen, Eisen aber auch anorganische Glasmaterialien oder Keramiken kommen prinzipiell in Frage. Als weiterer Parameter kommen die Wandstärke und die Länge des Verbindungskanals in Frage, über welche der thermische Widerstand berechenbar einstellbar ist.

Nachdem die Abschalttemperatur durch die Befüllung des Kollektors festgelegt ist und der thermische Widerstand des Verbindungskanales festgelegt ist, wird die Maximaltemperatur des Sammlers festgelegt werden durch Einstellen der Isolation des Sammlers entsprechend der Ungleichung (9). Im einfachsten Fall kann der Sammler mit einer Isolation mit hoher Güte ausgestattet werden und durch Einbringen von Fehlstellen, beispielsweise durch Ausnehmungen in der Isolation auf ein gewünschtes Maß eingestellt werden. Da die thermische Widerstand der Sammlerisolation und auch die Oberfläche des Sammlers bekannt ist, lässt sich auch der Wärmestrom, der durch die Isolation des Sammlers abfließt, vorausberechnen und gezielt einstellen.

Die Erfindung wird im Folgenden anhand eines Ausführungsbeispieles erläutert.

Eine erfindungsgemäße Sonnenwärme-Anlage für ein Einfamilienhaus mit einem Jahresenergiebedarf von 15.000 kWh Primärenergie ist ausschließlich mit eigensicher abschaltenden Kollektoren mit folgenden Parametern ausgeführt.

| | |
|---|---|
| Absorberf!äche | 12 m$^2$ (brutto) |
| Dachneigung | 45˚ |
| Speicher | 1,3 m^3 |
| Ausrichtung | Süd, Ost 11˚ |
| Verbindungskanal (Edelstahl) | 10 mm x 0,3 mm x 30 mm |
| Kondensatoreinbindung | nass |
| Therm, Widerstand der Sammlerisolierung | 140 K/W |
| Abschalttemperatur, eigensicher | 140˚C |
| Druck im System | 5 bar |
| Primärenergieverbrauch | 18500 kWh |
| Heizung | Ölheizkessel, Standard |
| **Ergebnisse** | |
| Ölverbrauch ohne Solaranlage | 1850 l / a |
| Ölverbrauch mit Solaranlage | 950 l / a |
| Einsparung | 900 l / a |

Mit dem eigensicheren Abschalten der Vakuumrohre mit Wärmerohr-Energieausleitung im Stagnationsfall bei 140˚C ist es möglich, auch das Sammlerrohr und die Verrohrung im Gebäude aus einem kostengünstigen Kunststoff herzustellen. Dabei gilt zu beachten, dass die Betriebstemperatur des Sekundärkreis-Fluids üblicherweise bei maximal 80˚C bis 90˚C liegt. Nur im Stagnationsfall werden 140 ˚C erreicht, wobei man abschätzen kann, dass maximal 50 h -100 h pro Jahr das System in Stagnation geht. Auf diese Weise ist bei einer Lebensdauer von 25 Jahren für 1250 h bis 2500 h mit einer Temperaturbelastung von 140˚C zu rechnen.

Für den dargestellten Belastungsfall sind eine ganze Reihe von Kunststoffen als Sammlerrohrmaterial geeignet. Die Isolierung der Sammlerrohre bzw. der gesamten aus den Hüllrohren der Vakuumrohre ragenden metallischen Teile erfolgt so, dass der thermische Widerstand der gesamten Isolierung von Sammler und Verbindungskanal bezogen auf ein Vakuumrohr 140 K/W beträgt. Der erlaubte Widerstand der Isolierung beträgt 150 K/W (siehe Figur 2). Damit ist der Widerstand der Isolierung, wie für die Einhaltung der Maximaltemperatur von 140˚C erforderlich, kleiner als der erlaubte Maximalwiderstand. Die Kollektoren besitzen weniger als 1% Wärmeleitungsverluste und schalten sicher bei 140˚C ab. Auch bei extremer solarer Einstrahlung (1100 W/m$^2$) und stundenlanger Besonnung, ohne Entnahme von Wärme übersteigt die Temperatur der Sammler die Abschalttemperatur von 140˚C nicht. Die Kollektoren sind eigensicher.

Auf Basis dieser eigensicheren Kollektoren wird eine Sonnenwärme-Anlage mit 120 Vakuumrohren auf einem 45˚ geneigtem Hausdach installiert Zur Anlage gehört ein Pufferspeicher mit einem Speichervolumen von 1.3 m$^3$ und die Steuerungstechnik auf Basis von Temperatursensoren, die an den Sammlern und am Speicher installiert sind. Im Kreislauf des Arbeitsfluides, eines Glykol-Wassergemisches ist eine Solarpumpe, ein kleines Ausgleichsgefäß von 2 I, ein Überdruckventil und ein Entlüfturgsventil eingefügt. Das Ausgleichsgefäß muss nur die Wärmeausdehnung des Sekundärkreis-Fluids aufnehmen, so dass es sehr klein ausgeführt werden kann.

Auf eine Rückschlagklappe wird verzichtet, da Wärmerohrkollektoren eine Diodenwirkung in Hinsicht auf den Wärmestrom besitzen. Damit sind bei Kollektortemperaturen, die tiefer sind als die des SekundärKreis-Fluids, die Absorberrohre thermisch entkoppelt.

Die Anlage steht permanent unter einem Druck von 5 bar. Da bei bei140˚C Wasser erst bei einem Druck größer 3,6 bar zu sieden beginnt, kommt es bei der Sonnenwärmeanlage nicht zur Dampfbildung mit allen bekannten schädlichen Auswirkungen. Alle Isolierstoffe können den niedrigen Temperaturen angepasst sein und auch das Frostschutzmittel ist nur bis 140˚C langzeitstabil.

## BEZUGSZEICHENLISTE

1     Verbindungskanal

2     Kollektor mit Finnen als Absorptionsfläche

3     Kondensator

4     Isolationsschicht

5     Sammlerrohr

7     Hülse

$\dot{Q}_a$     Solarwärmestrom

$\dot{Q}_{sv}$     Verlustwärmestrom

$\dot{Q}_{iso}$     Wärmestrom durch Isolierung

$\tau$     Transmission des eingesetzten Glases der Kollektorhüllrohre

$\alpha_1$     Absorptionskoeffizient der Finnenoberfläche der Kondensatoren

$P_s$     Solare Strahlungsleistung

$A_1$     aktive Absorptionsfläche des Absorbers

$\varepsilon_1$     Emissionskoeffizient der aktiven Absorberfläche, hier die Finnenoberfläche

$A_1$     aktive Absorptionsfläche des Absorbers

$\varepsilon_2$     Emissionskoeffizient der unbeschichteten Absorberfläche, hier die Finnenoberfläche

$A_2$     unbeschichtete Absorptionsfläche des Absorbers

$\sigma$     Strahlungszahl nach Boltzmann

$T_f$     Stagnationstemperatur der Finnen in Kelvin

$\beta$     Wärmeleitkoeffizient

$\theta_u$     Umgebungstemperatur in ˚C

$\theta_f$     Stagnationstemperatur, gemessen an den Finnen

$\theta_s$     Abschalttemperatur im Sammler

$R_z$     thermischer Widerstand des Verbindungskanals

$R_{iso}$      thermischer Widerstand der Isolierung des Sammlers

**Patentansprüche**

1. Anlage zur Nutzung von Solarwärme, aufweisend

   a) mindestens einen Kollektor (2), aufweisend Finnen als Absorptionsfläche,
   b) mindestens einen Sammler (5), der die von dem mindestens einen Kollektors (2) aufgenommene Solarwärme zu einer Verbrauchsstelle abführt, wobei
   c) der mindestens eine Kollektor (2) mit dem mindestens einen Sammler (5) über mindestens einen Kondensator wärmeschlüssig verbunden ist, und wobei
   d) der Kondensator einen Wärmeträger zum Wärmetransport der Solarwärme aus dem Kollektor (2) in den Sammler (5) aufweist und über ein Verbindungskanal (1) mit dem Kollektor (2) verbunden ist, und wobei
   e) der Sammler (5) eine thermische Isolierung (4) gegenüber der Umgebungstemperatur aufweist,
   **dadurch gekennzeichnet, dass**
   der Verbindungskanal (1) und die thermische Isolierung (4) des Sammlers (5) so dimensioniert sind, dass folgende Ungleichung erfülltt ist:

$$\frac{R_{iso}}{R_Z + R_{iso}} \leq \frac{\theta_S - \theta_U}{\theta_f - \theta_U}$$

   wobei $R_z$ für den thermischen Widerstand des Verbindungskanals (1), $R_{iso}$ für den thermischen Widerstand der thermischen isolierung (4) des Sammlers (5), $\theta_f$ für die Stagnationstemperatur des Kollektors (2), gemessen an den Finnen, $\theta_s$ für die maximale Temperatur des Sammlers (5) und $\theta_u$ für die Umgebungstemperatur steht.

2. Anlage zur Nutzung von Solarwärme nach Anspruch 1,
   **dadurch gekennzeichnet, dass**
   der Verbindungskanal (1) aus Edelstahl und/oder aus einem metallischen Material mit höherem spezifischen thermischen Widerstand als Kupfer besteht.

3. Anlage nach einem der Ansprüche 1 oder 2,
   **dadurch gekennzeichnet, dass**
   der mindestens eine Kondensator (3) in direktem Kontakt mit einem Fluid des Sammlers (5) steht oder trocken an diesen angebunden ist.

4. Anlage nach einem der Ansprüche 1 bis 3,
   **dadurch gekennzeichnet, dass**
   die Kollektoren (2) eine thermische Vakuum-Isolierung aufweisen.

5. Anlage nach einem der Ansprüche 1 bis 4,
   **dadurch gekennzeichnet, dass**
   die maximale Sammlertemperatur im Bereich zwischen 80˚C und 150˚C liegt und der statische Druck in den Kollektoren (2) höher ist als der Dampfdruck des Fluids des Sammlers bei dieser Temperatur.

6. Anlage nach einem der Ansprüche 1 bis 5,
   **dadurch gekennzeichnet, dass**
   das Fluid im Sammler (5) Wasser oder ein Frostschutzmittel-Wasser Gemisch ist.

7. Anlage nach einem der Ansprüche 1 bis 6,
   **dadurch gekennzeichnet, dass**
   dass das Sammlerrohr aus einem dauer-temperaturfesten Kunststoff, aus einer Keramik oder aus Glas besteht.

8. Anlage nach einem der Ansprüche 1 bis 7,
   **dadurch gekennzeichnet, dass**

dass ein Ausdehnungsgefäß im Kreislauf des Sammlers (5) vorgesehen ist, der für die thermische Ausdehnung des Fluids im Sammlerkreislauf dimensioniert ist.

9. Anlage nach einem der Ansprüche 1 bis 8,
   **dadurch gekennzeichnet, dass**
   dass der Sammler (5), die thermische Isolierung (4) und Verrohrung aus einem bei der gewählten maximalen Temperatur dauerhaft beständigem Kunststoff bestehen.

10. Anlage nach einem der Ansprüche 1 bis 9,
    **dadurch gekennzeichnet, dass**
    Verhältnis der thermischen Widerstände so ausgelegt ist, dass die Ungleichung im Intervall erfüllt ist, der sich aus schwankenden Außentemperaturen $\theta_u$ zwischen -25°C und +35°C ergibt.

Fig. 1

14

Fig. 2

Fig. 3

EP 2 455 682 A2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 69102856 T2
- DE 20108682 U1
- DE 3015061

- EP 1970642 A2
- DE 10341741 A1
- DE 2022008007647 U1